# EUROPÄISCHE PATENTSCHRIFT

(11) **EP 3 600 975 B1**
(45) Veröffentlichungstag und Bekanntmachung des Hinweises auf die Patenterteilung: **13.01.2021**
(21) Anmeldenummer: 18712158.7
(22) Anmeldetag: 15.03.2018
(51) Int. Cl.: B60R 21/2165, B29C 37/00

(54) **VERKLEIDUNGSELEMENT UND HERSTELLUNGSVERFAHREN FÜR EIN VERKLEIDUNGSELEMENT**
LINING ELEMENT, AND PROCESS FOR MANUFACTURING A LINING ELEMENT
ÉLÉMENT D'HABILLAGE ET PROCÉDÉ DE FABRICATION D'UN ÉLÉMENT D'HABILLAGE

(30) Priorität: 23.03.2017 DE 102017204963
(43) Veröffentlichungstag der Anmeldung: 05.02.2020
(73) Patentinhaber: Bayerische Motoren Werke Aktiengesellschaft, 80809 München (DE)
(72) Erfinder: SCHWABL, Martin, 84098 Hohenthann (DE)
(86) Internationale Anmeldenummer: PCT/EP2018/056532
(87) Internationale Veröffentlichungsnummer: WO 2018/172179

(56) Entgegenhaltungen:
- DE-A1- 10 128 745
- DE-A1- 10 164 761
- DE-A1-102014 103 940
- US-A1- 2003 020 202
- US-A1- 2004 164 531

## Beschreibung

Die Erfindung betrifft ein Verkleidungselement zur Verwendung an einem Fahrzeug zur Abdeckung eines Airbags.

Bei der Herstellung eines Fahrzeugs werden Airbags aus Sicherheitsgründen und zur Verbesserung des Designs mit Verkleidungselementen abgedeckt. Damit der Airbag im Falle eines Auslösens funktioniert, sind die Verkleidungselemente so ausgelegt, dass sie an vordefinierten Bruchstellen im Vergleich zu den sonstigen Bereichen des Verkleidungselements leicht brechen bzw. leicht reißen und den Airbag passieren lassen. Der Airbag durchschlägt bzw. durchbricht die Verkleidungselemente in einem vorher festgelegten Sollbruchbereich. Ein Sollbruchbereich wird von einer Sollbruchkontur umgeben. Im Falle einer Belastung durch den Airbag, soll der Sollbruchbereich entlang der Sollbruchkontur brechen bzw. reißen. Hierzu wird das Verkleidungselement meist entlang der Sollbruchkontur geschwächt. Im Stand der Technik sind verschiedene Verfahren zur Schwächung der Sollbruchkontur bekannt. Die Verfahren lassen sich im Wesentlichen in zwei Gattungen gliedern. Zum einen in nachträgliche Verfahren, die nach der Herstellung des Verkleidungselements angewandt werden, beispielsweise durch thermische oder mechanische Bearbeitung wie Lasern, und zum anderen in integrale Verfahren, die integral bei der Herstellung des Verkleidungselements angewandt werden. Verfahren nach der Herstellung des Verkleidungselements sind durch zusätzliche Maschinen, Arbeitsschritte, Lagerkosten, Handhabungs- und Wartezeiten teuer und zeitaufwändig. Bei Verfahren, die integral bei der Herstellung des Verkleidungselements eingesetzt werden, zeichnet sich oft die Schwächung des Verkleidungselements durch eine Sollbruchkontur auf einer Sichtseite, die den Fahrzeuginsassen zugewandt ist, ab, sodass Linien und unterschiedliche Konturen und Strukturen zu sehen sind, die meist als unästhetisch und störend empfunden werden. Um eine ästhetische, optisch makellose und zugleich funktionale Fläche auf der Sichtseite herzustellen sind weitere Maschinen, Arbeitsschritte, Lagerkosten, Handhabungs- und Wartezeiten nötig, was die Herstellungskosten zusätzlich erhöht.

Druckschriftlicher Stand der Technik im vorliegenden technischen Gebiet, welcher den Oberbegriff des Anspruch 1 widerspiegelt, ist in den Dokumenten US 2004/164531 A1, DE 10 2014 103 940 A1, DE 101 28 745 A1 und US 2003/020202 A1 offenbart.

Der Erfindung liegt deshalb die Aufgabe zugrunde, die vorbesagten Nachteile zu überwinden und ein Verkleidungselement mit einem Sollbruchbereich bzw. einer Sollbruchlinie bereitzustellen, der bzw. die sich auf einer Zierschicht, die auf einer Sichtseite angeordnet ist, nicht abzeichnet, wobei der Sollbruchbereich einfach, kosteneffizient und integral bei der Herstellung des Verkleidungselements herzustellen sein soll.

Diese Aufgabe wird durch die Merkmalskombination gemäß Patentanspruch 1 gelöst.

Erfindungsgemäß wird ein Verkleidungselement zur Verwendung an einem Fahrzeug zur Abdeckung eines Airbags vorgeschlagen, wobei das Verkleidungselement eine formstabile Trägerschicht mit zumindest einem Sollbruchbereich umfasst. Der Sollbruchbereich wird von einer Sollbruchkontur von einem den Sollbruchbereich umgebenden Bereich des Verkleidungselements abgegrenzt, wobei die Sollbruchkontur aus zumindest einer Sollbruchlinie besteht. Ein rechteckiger Sollbruchbereich wird beispielsweise von einer Sollbruchkontur aus vier Sollbruchlinien zu jeweils einer seiner Seiten auf der rückseitigen Oberfläche der Trägerschicht abgegrenzt. Der Sollbruchbereich wird durch zumindest eine Sollbruchlinie von einem Umgebungsbereich und/oder einem weiteren Sollbruchbereich abgegrenzt, wobei entlang der bzw. jeweils einer Sollbruchlinie eine Vielzahl von regelmäßig beabstandeten Sollbruchstellen gebildet ist. Die Sollbruchlinie ist ein eindimensionaler Verlauf eines Sollbruchs auf der Sichtseite der Trägerschicht, wobei die Sollbruchstellen das Verkleidungselement bzw. die Trägerschicht in seiner Dicke D schwächen, sodass das Verkleidungselement im Falle einer bestimmungsgemäßen Belastung entlang der Sollbruchlinie bricht. Die Trägerschicht ist bei bestimmungsgemäßen Umgebungstemperaturen, jedoch zumindest bis 85 °C, formstabil.

Ferner ist eine erfindungsgemäße Ausbildung von Vorteil, bei der die Trägerschicht eine Sichtseite und eine von der Sichtseite abgewandte Rückseite aufweist, auf der Sichtseite eine Zierschicht, vorzugsweise aus Leder, flächig auf der Trägerschicht angeordnet ist und die Vielzahl von Sollbruchstellen auf der Sichtseite angeordnet ist. Die Zierschicht dient der optischen und haptischen Gestaltung der Trägerschicht, wobei die Zierschicht von dem Airbag durchbrechbar ist.

Vorteilhaft ist ferner eine Ausführungsform, bei der eine erste Fläche der Zierschicht mit einer zweiten Fläche der Zierschicht eine Ebene ausbildet. Die erste Fläche liegt direkt über einer auf der Sichtseite liegenden Sollbruchstelle bzw. der Sollbruchlinie und die zweite Fläche grenzt direkt an die erste Fläche an und umgibt die erste Fläche vollständig. Dadurch, dass die erste und zweite Fläche eine Ebene ausbilden, sind die Sollbruchstellen der Sollbruchlinie auf der Sichtseite für einen Betrachter mit einem unbewaffneten bzw. bloßen Auge nicht zu erkennen.

Erfindungsgemäß bildet die Trägerschicht auf ihrer Rückseite zumindest eine Schweißrippe aus, wobei zumindest ein Teil der Sollbruchstellen der Vielzahl von Sollbruchstellen auf der Sichtseite der Trägerschicht gegenüber der zumindest einen Schweißrippe angeordnet sind. Durch die Anordnung der Sollbruchstellen direkt gegenüber einer Schweißrippe ist eine Vielzahl von Vorsprüngen an einer Werkzeugseite eines Werkzeugs zur Ausbildung der Sollbruchstellen bei der Herstellung länger ausbildbar und näher an die gegenüberliegende Werkzeugseite des Werkzeugs bringbar, ohne dass es zu einer Kollision der Vielzahl von Vorsprüngen mit der gegenüberliegenden Werkzeugseite kommt.

Eine weitere vorteilhafte Ausbildungsvariante vor, dass die Trägerschicht ein Verstärkungsnetz auf ihrer Rückseite umfasst. Das Verstärkungsnetz ist auf oder in der Trägerschicht angeordnet und besteht vorzugsweise aus Aramidfasern. Durch das Verstärkungsnetz werden die Sollbruchbereiche bei einem Auslösen des Airbags auf zumindest einer Seite gehalten, sodass diese nicht vollständig von den umliegenden Bereichen abgelöst werden bzw. noch mit den umliegenden Bereichen verbunden sind.

Ferner ist eine Ausbildung vorteilhaft, bei der die Trägerschicht ein Integralschaum ist und/oder aus einem Kunststoff- oder einem Kunststoffverbundmaterial gebildet ist. Vorteilhafterweise, ist die Trägerschicht aus einem Kunststoffverbundmaterial bildbar, wobei das Kunststoffverbundmaterial Polypropylen und zu 20% Glasfasern umfasst.

Besonders vorteilhaft ist ferner ein Ausführungsbeispiel, bei dem eine Sollbruchstelle der Vielzahl von Sollbruchstellen eine Ausnehmung in der Trägerschicht ist. Die Ausnehmung ist zu einer Seite hin zu der Umgebung geöffnet und wird auf den verbleibenden Seiten der Ausnehmung von der Trägerschicht begrenzt.

Die Ausnehmung ist bei einer weiteren vorteilhaften Ausbildung zylinderförmig, quaderförmig, kegelförmig oder pyramidenförmig und/oder umfasst abgerundete Kanten. Ebenfalls vorteilhaft ist eine sechseckige Grundform der Ausnehmung, bei der jeweils eine Ecke der Ausnehmung in Richtung der Sollbruchlinie weist.

Von Vorteil ist ferner eine Ausbildungsform, bei der die Ausnehmungen 1 mm bis 4 mm tief, 1 mm bis 3 mm breit, 1 mm bis 10 mm lang und/oder mit einem Abstand A von 1 mm bis 4 mm beabstandet sind und/oder die Trägerschicht 2 mm bis 6 mm dick ist. Bei einer zylindrischen Form entspricht die Länge L der Breite B als Durchmesser X. Der Abstand zwischen zwei Ausnehmungen einer Vielzahl von Sollbruchstellen bzw. der Abstand zwischen der Ausnehmung und einer weiteren Ausnehmung ist jeweils von einem Randbereich bzw. einer Seitenfläche in Richtung der Sollbruchlinie zu der nächstgelegenen Seitenfläche der nächstgelegenen Ausnehmung entlang der Sollbruchlinie zu messen. Vorteilhaft ist ferner, dass bei einer Weiterbildung die verbleibende Restdicke R der Trägerschicht an einer Ausnehmung 0,5 mm bis 3 mm beträgt. Die Ausnehmung weist eine für die Restdicke R der Trägerschicht eine jeweils passende Tiefe T auf. Die Tiefe T der Ausnehmung zuzüglich der Restdicke R der Trägerschicht ergibt die Dicke D der Trägerschicht in dem Umgebungsbereich bzw. direkt neben der Ausnehmung.

Vorteilhaft ist auch ein Ausbildungsbeispiel, bei dem der zumindest eine Sollbruchbereich bei einem bestimmungsgemäßen Einbau des Verkleidungselements in ein Fahrzeug als Airbagabdeckung über einem gefalteten Luftsack eines Airbags angeordnet ist, sodass der gefaltete Luftsack beim Entfalten den Sollbruchbereich trifft und durchbricht.

Eine weitere vorteilhafte Ausbildungsalternative sieht vor, dass die Sollbruchstellen der Vielzahl von Sollbruchstellen einer ersten Sollbruchlinie mit einem ersten Abstand zueinander beabstandet sind und die Sollbruchstellen der Vielzahl von Sollbruchstellen einer zweiten Sollbruchlinie mit einem zweiten Abstand zueinander beabstandet sind, der sich von dem ersten Abstand unterscheidet.

Durch unterschiedliche Abstände zwischen den Ausnehmungen entlang einer Sollbruchlinie oder unterschiedlichen Abständen zwischen den Ausnehmungen verschiedener Sollbruchlinien sind gezielt Sollbruchabläufe und Sollbruchkräfte einstellbar. Es sind erst brechende Sollbruchlinien und zweit brechende Sollbruchlinien erzeugbar, die in einer bestimmten Reihenfolge brechen. Ferner sind die Sollbruchlinien durch Einstellung der nötigen Sollbruchkraft auf den Airbag und den Entfaltungsablauf des Airbags einstellbar.

Die Sollbruchkraft ist bei einer vorteilhaften Weiterbildung ferner durch die Restdicke R der Trägerschicht an einer der Ausnehmungen der Vielzahl von Sollbruchstellen einstellbar. Ist die Restdicke R der Trägerschicht an allen Ausnehmungen einer Sollbruchlinie gleich, herrscht eine gleichbleibende restdickenabhängige Sollbruchkraft entlang der jeweiligen Sollbruchlinie. Wird die Restdicke R an den Ausnehmungen der Vielzahl von Sollbruchstellen variiert, variiert die restdickenabhängige Sollbruchkraft entlang der jeweiligen Sollbruchlinie.

Die Zierschicht ist als ein Filmscharnier ausbildbar, sodass ein Sollbruchbereich auf einer Seite von dem Filmscharnier gehalten ist und nicht vollständig absprengbar ist.

Es wird desweiteren ein Verfahren zur Herstellung eines Verkleidungselements vorgeschlagen. Das Verfahren ist ein Spritzguss-Integralschaumverfahren, bei dem das Verkleidungselement in einer Kavität zwischen einer ersten und einer zweiten Werkzeugseite eines Werkzeugs angeordnet ist. Bei dem Verfahren erfolgt ein Prägehub, indem die erste Werkzeugseite und die zweite Werkzeugseite einander angenähert werden, bevor die Kavität bei dem Spritzguss-Integralschaumverfahren zum Aufschäumen eines eingespritzten Materials vergrößert wurde. Durch den Prägehub prägt sich eine Vielzahl von Vorsprüngen, die an der ersten Werkzeugseite in Richtung der zweiten Werkzeugseite angeordnet oder ausgebildet sind, zur Bildung der Ausnehmungen in das Verkleidungselement ein.

Erfindungsgemäß wird ferner die Verwendung eines Verkleidungselements zur Abdeckung eines Airbags in einem Fahrzeug vorgeschlagen. Vorzugsweise wird das erfindungsgemäße Verkleidungselement über einem Beifahrer-Frontairbag im Beifahrerbereich angeordnet.

Die Ausnehmungen werden integral bei der Herstellung der Trägerschicht aus Integralschaum im Integralschaumverfahren hergestellt, sodass die Randbereiche bzw. Randschicht- oder Grenzschichtbereiche der Trägerschicht sowohl zu der Umgebung als auch zu den Ausnehmungen bzw. Sollbruchstellten kleinporig, eben und vollständig geschlossen ist, wohingegen die im Inneren der Trägerschicht liegenden Bereiche großporig bzw. zum Teil hohl sind.

Die vorstehend offenbarten Merkmale sind beliebig kombinierbar soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein Ausschnitt eines Verkleidungselements mit einer Sollbruchkontur mit zwei Sollbruchbereichen aus einer Aufsicht;
- Fig. 2: Schnittansicht durch eine Trägerschicht;
- Fig. 3a - 3d: verschiedene Ausnehmungsgeometrien aus der Draufsicht;
- Fig. 4a - 4c: verschiedene Zustände der Trägerschicht bei dem Verfahren zur Herstellung der Trägerschicht.

Die Figuren sind beispielhaft schematisch. Gleiche Bezugszeichen in den Figuren weisen auf gleiche funktionale und/oder strukturelle Merkmale hin.

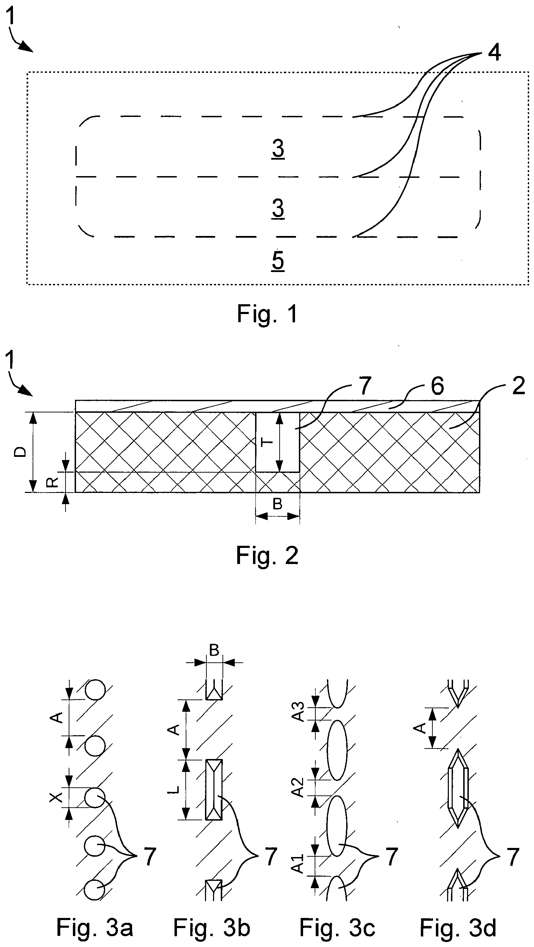

Figur 1 zeigt ein Verkleidungselement 1 mit zwei Sollbruchbereichen 3. Die Sollbruchbereiche 3 sind jeweils durch vier Sollbruchlinien 4 abgegrenzt, wobei eine Sollbruchlinie 4 zwischen den Sollbruchbereichen 3 liegt und die beiden Sollbruchbereiche 3 zueinander abgrenzt, sodass insgesamt sieben Sollbruchlinien 4 auf dem Verkleidungselement 1 verlaufen. Die zum Umgebungsbereich 5 abgrenzenden Sollbruchlinien 4 der Sollbruchbereiche 3 gehen in einander über, sodass die Ecken der Sollbruchbereiche 3 zu dem Umgebungsbereich 5 abgerundet sind. Die einzelnen Sollbruchstellen sind entlang der jeweiligen Sollbruchlinien angeordnet, wobei die Abstände und Maße der Sollbruchstellen der zwischen den Sollbruchlinien aufeinander abgestimmt sind.

Figur 2 zeigt eine Schnittansicht durch ein Verkleidungselement 1. Auf der Sichtseite einer Trägerschicht 2 ist eine Ausnehmung 7 angeordnet und auf der Sichtseite der Trägerschicht 2 eine Zierschicht 6 aus Leder, sodass die Ausnehmung 7 abgedeckt ist. Die Trägerschicht 2 besteht aus einem zu einem Integralschaum aufgeschäumten Faserverbundmaterial, wobei die Trägerschicht im Spritzguss-Integralschaumverfahren hergestellt ist. Die Randbereiche der Trägerschicht 2 weisen im Wesentlichen keine bzw. sehr kleine Poren im Vergleich zu den inneren Bereichen der Trägerschicht auf, sodass die Trägerschicht 2 von außen eine ebene Oberfläche aufweist. Im Inneren der Trägerschicht 2 sind zum Teil große Poren bzw. Hohlräume ausgebildet, sodass die Trägerschicht ein geringes Gewicht bei hoher Festigkeit aufweist. Die Ausnehmung 7 besitzt eine Tiefe T in der Trägerschicht 2, sodass die Dicke D der Trägerschicht 2 in dem Bereich der Ausnehmung 7 auf eine Restdicke R reduziert ist. Die Oberfläche eines ersten Bereichs der Zierschicht 6 auf der Sichtseite, der direkt über einer Ausnehmung 7 liegt, bildet mit einem zweiten Bereich, der direkt benachbart zu dem ersten Bereich auf der Zierschicht 6 liegt, eine gemeinsame Ebene aus, sodass die Zierschicht auf der Sichtseite der Trägerlage keine Ausnehmungen oder Niveausprünge in einem Bereich gegenüber der Ausnehmungen aufweist.

Die Figuren 3a bis 3d zeigen verschiedene Formvarianten der Sollbruchstellen bzw. Ausnehmungen 7. Abhängig von der angestrebten Sollbruchkraft, dem Sollbruchverlauf und der angestrebten Restdicke, sind die Ausnehmungen verschiedenartig ausbildbar.

In Figur 3a sind die Ausnehmungen 7 in ihrer Grundform rund bzw. in ihrer Geometrie zylinderförmig ausgebildet. Die Breite B entspricht der Länge L als Durchmesser X und die einzelnen Ausnehmungen 7 zueinander mit einem gleichbleibendem Abstand A beabstandet sind.

Figur 3b zeigt Ausnehmungen einer Vielzahl von Sollbruchstellen, wobei die Ausnehmungen pyramidenförmig, entlang der Sollbruchlinie gestreckt ausgebildet sind.

In Figur 3c sind die Ausnehmungen oval ausgebildet und mit gleichmäßig kleiner werdenden Abständen A1, A2 und A3 zueinander beabstandet.

Figur 3d zeigt Ausnehmungen einer Vielzahl von Sollbruchstellen, die in ihrer Grundform sechseckig geformt sind und von der Sichtseite in Richtung der Rückseite zulaufen, sodass eine jeweilige Bodenfläche der jeweiligen Ausnehmung 7 weiter eine sechseckige Form aufweist, die jedoch gegenüber der sechseckigen Grundform verkleinert ist. Die Ausnehmung ist durch das Zulaufen in einem Schnitt quer zu der Sollbruchlinie trapezförmig ausgebildet. Jeweils eine Kante der sechseckigen Form auf jeder Seite der sechseckigen Form in Längsrichtung weißt in Richtung der Sollbruchlinie.

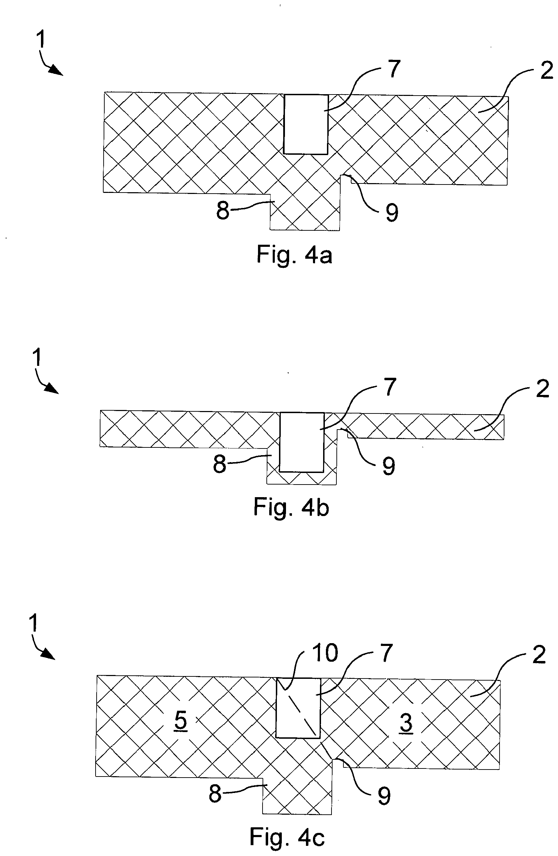

Die Figuren 4a bis 4c zeigen jeweils einen Zustand der Trägerschicht 2 während der Herstellung des Verkleidungselements 1 mit dem Spritzguss-Integralschaumverfahren als Querschnitt durch die Trägerschicht 2.

In Figur 4a ist die Trägerschicht 2 nach dem Einspritzen des Materials aus dem die Trägerschicht 2 besteht zu sehen. Die Trägerschicht 2 bildet auf ihrer Rückseite gegenüber der Ausnehmung 7 eine Schweißrippe 8 aus und an der Schweißrippe 8 eine den Sollbruchbereich zumindest zum Teil umlaufende Kerbe 9.

In Figur 4b wurde die Trägerschicht 2 aus Figur 4a durch das Werkzeug verdichtet, indem die erste Werkzeugseite und die zweite Werkzeugseite einander angenähert wurden. Dabei tauchen die Vorsprünge zur Erzeugung der Ausnehmungen 7 in die Schweißrippe 8 ein. Die Vorsprünge die in die Schweißrippe 8 eintauchen sind länger ausbildbar, als Vorsprünge dich nicht in die Schweißrippe 8 eintauchen, da diese sonst mit der gegenüberliegenden Werkzeugseite kollidieren würden.

In Figur 4c wurde die Kavität in der die Trägerschicht 2 aus Figur 4b in einem Werkzeug angeordnet ist vergrößert. Durch chemische oder physikalische Treibmittel wird die Trägerschicht 2 in der Kavität expandiert bzw. aufgeschäumt. Beim Vergrößern der Kavität expandieren die noch nicht verfestigten Innenbereiche der Trägerschicht 2. Durch die Expansion der Innenbereiche entsteht die innenliegende Schaumstruktur. Ferner ist in Figur 4c der Verlauf der angestrebte Bruchverlauf 10 durch die Trägerschicht 2 im Querschnitt der Trägerschicht 2 zu sehen. Der angestrebte Bruchverlauf 10 erstreckt sich von der Kerbe 9 durch die Trägerschicht 2 in die Ausnehmung 7. Der Sollbruchbereich 3 liegt in Figur 4c rechts des Bruchverlaufs 10, der Umgebungsbereich 5 links des Bruchverlaufs 10.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise könnte die Vielzahl von Vorsprüngen, die an der ersten Werkzeugseite angeordnet sind, als ein- und ausfahrbare Stifte ausgebildet sein, die in die erste Werkzeugseite ein- und ausfahrbar sind, sodass der Abstand zwischen der ersten Werkzeugseite und der zweiten Werkzeugseite freiwählbar ist und die ein- und ausfahrbaren Stifte in ihrer Höhe gegenüber der ersten Werkzeugseite frei einstellbar sind.

## Patentansprüche

1. Verkleidungselement (1) zur Verwendung an einem Fahrzeug zur Abdeckung eines Airbags umfassend eine formstabile Trägerschicht (2) mit zumindest einem Sollbruchbereich (3) der durch zumindest eine Sollbruchlinie (4) von einem Umgebungsbereich (5) und/oder einem weiteren Sollbruchbereich (3) abgegrenzt ist, wobei entlang der Sollbruchlinie (4) eine Vielzahl von regelmäßig beabstandeten Sollbruchstellen angeordnet ist,
wobei die Trägerschicht (2) eine Sichtseite und eine von der Sichtseite abgewandte Rückseite aufweist, auf der Sichtseite eine Zierschicht (6), flächig auf der Trägerschicht (2) angeordnet ist und die Vielzahl von Sollbruchstellen auf der Sichtseite angeordnet ist, **dadurch gekennzeichnet, dass** die Trägerschicht (2) zumindest eine Schweißrippe (8) auf ihrer Rückseite ausbildet und zumindest ein Teil der Sollbruchstellen der Vielzahl von Sollbruchstellen auf der Sichtseite der Trägerschicht gegenüber der Schweißrippe (8) angeordnet sind.

2. Verkleidungselement (1) nach Anspruch 1, wobei eine erste Fläche der Zierschicht (6) direkt über einer auf der Sichtseite liegenden Sollbruchstelle mit einer zweiten Fläche der Zierschicht, die direkt an die erste Fläche angrenzt und sie vollständig umgibt, eine Ebene ausbildet, sodass die Sollbruchstellen der Sollbruchlinie (4) auf der Sichtseite für einen Betrachter nicht zu erkennen sind.

3. Verkleidungselement (1) nach einem der Ansprüche 1 oder 2, wobei die Trägerschicht (2) auf der Rückseite ein Verstärkungsnetz, vorzugsweise aus Aramidfasern, umfasst, das an oder in der Trägerschicht angeordnet ist

4. Verkleidungselement (1) nach einem vorhergehenden Anspruch, wobei
die Trägerschicht (2) ein Integralschaum ist und/oder aus einem Kunststoffmaterial oder einem Kunststoffverbundmaterial gebildet ist und/oder die Trägerschicht (2) aus einem Kunststoffverbundmaterial gebildet ist, das Polypropylen und zu 20% Glasfasern umfasst.

5. Verkleidungselement (1) nach einem vorhergehenden Anspruch, wobei
eine Sollbruchstelle der Vielzahl von Sollbruchstellen eine Ausnehmung (7) in der Trägerschicht (2) ist.

6. Verkleidungselement (1) nach dem vorhergehenden Anspruch, wobei
die Ausnehmung (7) zylinderförmig, quaderförmig, kegelförmig oder pyramidenförmig ist und/oder Kanten der Ausnehmung (7) abgerundet sind.

7. Verkleidungselement (1) nach den Ansprüchen 5 oder 6, wobei
die Ausnehmung (7) eine Tiefe T zwischen 1 mm und 4 mm, eine Breite B zwischen 1 mm und 3 mm, eine Länge L zwischen 1 mm und 10 mm und/oder einen Abstand A zwischen 1 mm und 4 mm zu einer weiteren Ausnehmung aufweist und/oder die Trägerschicht (2) eine Dicke D zwischen 2 mm und 6 mm hat.

8. Verkleidungselement (1) nach einem vorhergehenden Anspruch, wobei
der zumindest eine Sollbruchbereich (3) bei einem bestimmungsgemäßen Einbau des Verkleidungselements (1) in ein Fahrzeug als Airbagabdeckung über einem gefalteten Luftsack eines Airbags angeordnet ist, sodass der Luftsack beim Entfalten den Sollbruchbereich (3) trifft und durchbricht.

9. Verwendung eines Verkleidungselements (1) nach einem der Ansprüche 1 bis 8 zur Abdeckung eines Airbags in einem Fahrzeug.

## Claims

1. Lining element (1) for use on a vehicle for covering an airbag, comprising a dimensionally stable backing layer (2) with at least one predetermined breaking region (3) which is delimited from a surrounding region (5) and/or a further predetermined breaking region (3) by at least one predetermined breaking line (4), wherein a multiplicity of regularly spaced predetermined breaking points is arranged along the predetermined breaking line (4),
wherein the backing layer (2) has a visible side and a rear side facing away from the visible side, on the visible side a decorative layer (6) is arranged flat on the backing layer (2), and the multiplicity of predetermined breaking points is arranged on the visible side, **characterized in that**
the backing layer (2) forms at least one welding rib (8) on its rear side, and at least some of the predetermined breaking points of the multiplicity of predetermined breaking points are arranged on the visible side of the backing layer opposite the welding rib (8).

2. Lining element (1) according to Claim 1, wherein a first surface of the decorative layer (6) directly above a predetermined breaking point lying on the visible side forms a plane together with a second surface of the decorative layer, which surface is directly adjacent to the first surface and completely surrounds the latter, and therefore the predetermined breaking points of the predetermined breaking line (4) on the visible side cannot be seen by an observer.

3. Lining element (1) according to one of Claims 1 or 2, wherein the rear side of the backing layer (2) comprises a reinforcing network, preferably composed of aramid fibres, which is arranged on or in the backing layer.

4. Lining element (1) according to a preceding claim, wherein
the backing layer (2) is an integral foam and/or is formed from a plastics material or a plastics composite material, and/or the backing layer (2) is formed from a plastics composite material which comprises polypropylene and glass fibres up to 20%.

5. Lining element (1) according to a preceding claim, wherein
one predetermined breaking point of the multiplicity of predetermined breaking points is a recess (7) in the backing layer (2).

6. Lining element (1) according to the preceding claim, wherein
the recess (7) is cylindrical, cuboidal, conical or pyramid-shaped, and/or edges of the recess (7) are rounded.

7. Lining element (1) according to either of Claims 5 and 6, wherein
the recess (7) has a depth T of between 1 mm and 4 mm, a width B of between 1 mm and 3 mm, a length L of between 1 mm and 10 mm and/or a distance A of between 1 mm and 4 mm from a further recess, and/or the backing layer (2) has a thickness D of between 2 mm and 6 mm.

8. Lining element (1) according to a preceding claim, wherein,
when the lining element (1) is correctly installed in a vehicle as an airbag covering, the at least one predetermined breaking region (3) is arranged above a folded air sack of an airbag such that the air sack, as it unfolds, strikes and breaks through the predetermined breaking region (3).

9. Use of a lining element (1) according to one of Claims 1 to 8 for covering an airbag in a vehicle.

## Revendications

1. Élément d'habillage (1) destiné à être utilisé sur un véhicule pour recouvrir un airbag, comportant une couche de support (2) à stabilité de forme dotée d'au moins une zone destinée à la rupture (3) qui est délimitée, par rapport à une zone environnante (5) et/ou une autre zone destinée à la rupture (3), par au moins une ligne destinée à la rupture (4), dans lequel une pluralité de points destinés à la rupture espacés régulièrement sont disposés le long de la ligne destinée à la rupture (4),
dans lequel la couche de support (2) comprend un côté visible et un côté arrière opposé au côté visible, une couche décorative (6) est disposée à plat sur la couche de support (2) sur le côté visible et la pluralité de points destinés à la rupture est disposée sur le côté visible, **caractérisé en ce que**
la couche de support (2) forme au moins une nervure de soudure (8) sur son côté arrière et au moins une partie des points destinés à la rupture de la pluralité de points destinés à la rupture sont disposés de manière opposée à la nervure de soudure (8) sur le côté visible de la couche de support.

2. Élément d'habillage (1) selon la revendication 1, dans lequel
une première surface de la couche décorative (6) directement au-dessus d'un point destiné à la rupture situé sur le côté visible forme un plan avec une deuxième surface de la couche décorative qui est directement adjacente à la première surface et l'entoure complètement, de telle sorte que les points destinés à la rupture de la ligne destinée à la rupture (4) ne soient pas visibles par un observateur sur le côté visible.

3. Élément d'habillage (1) selon l'une des revendications 1 et 2, dans lequel la couche de support (2) comporte, sur le côté arrière, un réseau de renforcement, de préférence constitué de fibres d'aramide, lequel est disposé sur ou dans la couche de support.

4. Élément d'habillage (1) selon l'une des revendications précédentes, dans lequel
la couche de support (2) est une mousse à peau intégrée et/ou est formée à partir d'une matière synthétique ou d'une matière synthétique composite et/ou la couche de support (2) est formée à partir d'une matière synthétique composite qui comporte du polypropylène et jusqu'à 20% de fibres de verre.

5. Élément d'habillage (1) selon l'une des revendications précédentes, dans lequel
un point destiné à la rupture de la pluralité de points destinés à la rupture est un évidement (7) dans la couche de support (2).

6. Élément d'habillage (1) selon la revendication précédente, dans lequel
l'évidement (7) est de forme cylindrique, parallélépipédique, conique ou pyramidale et/ou des arêtes de l'évidement (7) sont arrondies.

7. Élément d'habillage (1) selon la revendication 5 ou 6, dans lequel l'évidement (7) présente une profondeur T comprise entre 1 mm et 4 mm, une largeur B comprise entre 1 mm et 3 mm, une longueur L comprise entre 1 mm et 10 mm et/ou est situé à une distance A compris entre 1 mm et 4 mm par rapport à un autre évidement et/ou la couche de support (2) présente une épaisseur D comprise entre 2 mm et 6 mm.

8. Élément d'habillage (1) selon l'une des revendications précédentes, dans lequel
l'au moins une zone destinée à la rupture (3) est, en cas d'installation correcte de l'élément d'habillage (1) dans un véhicule, disposée en tant que cache d'airbag au-dessus d'un sac gonflable plié d'un airbag, de telle sorte que le sac gonflable, lors du déploiement, frappe et rompe la zone destinée à la rupture (3).

9. Utilisation d'un élément d'habillage (1) selon l'une des revendications 1 à 8 pour recouvrir un airbag dans un véhicule.
